# EUROPÄISCHE PATENTSCHRIFT

(11) **EP 1 585 938 B1**
(45) Veröffentlichungstag und Bekanntmachung des Hinweises auf die Patenterteilung: **26.07.2006**
(21) Anmeldenummer: 04702286.8
(22) Anmeldetag: 15.01.2004
(51) Int. Cl.: G01B 11/245, G01B 11/24, G01B 11/255, G01B 11/30

(54) **OPTISCHES MESSVERFAHREN UND PRAZISIONSMESSMASCHINE ZUR ERMITTLUNG VON IDEALFORMABWEICHUNGEN TECHNISCH POLIERTER OBERFLACHEN**
OPTICAL MEASURING PROCESS AND PRECISION MEASURING MACHINE FOR DETERMINING THE DEVIATIONS FROM IDEAL SHAPE OF TECHNICALLY POLISHED SURFACES
PROCEDE DE MESURE OPTIQUE ET MACHINE DE MESURE DE PRECISION POUR LA DETERMINATION D'ECARTS PAR RAPPORT A UNE FORME IDEALE DE SURFACES POLIES PAR DES MOYENS TECHNIQUES

(30) Priorität: 23.01.2003 DE 10303659
(43) Veröffentlichungstag der Anmeldung: 19.10.2005
(73) Patentinhaber: Berliner Elektronenspeicherring-Gesellschaft für Synchrotronstrahlung mbH, 12489 Berlin (DE)
(72) Erfinder: LAMMERT, Heiner, 15831 Mahlow (DE); NOLL, Tino, 12524 Berlin (DE); SCHLEGEL, Thomas, 10247 Berlin (DE); SIEWERT, Frank, 10405 Berlin (DE); ZESCHKE, Thomas, 10243 Berlin (DE)
(74) Vertreter: Rudolph, Margit
(86) Internationale Anmeldenummer: PCT/DE2004/000102
(87) Internationale Veröffentlichungsnummer: WO 2004/065904

(56) Entgegenhaltungen:
- DE-C- 19 833 269
- DE-C- 19 842 190

## Beschreibung

Die Erfindung bezieht sich auf ein optisches Messverfahren zur Ermittlung von Idealformabweichungen technisch polierter Oberflächen mit ebenem oder gekrümmtem Verlauf eines verschiebbar angeordneten Prüflings durch referenzfreie, optische Antastungen mit zumindest zwei Messstrahlen, die jeweils durch eine verschiebbare Strahlumlenkeinheit auf die Oberfläche des Prüflings umgelenkt und unter dem jeweiligen Reflexionswinkel detektiert werden, und auf eine Präzisionsmessmaschine zur Durchführung des Messverfahrens.

Die messtechnischen Anforderungen an ein derartiges Messverfahren und an die, dieses umsetzende Präzisionsmessmaschine sind extrem hoch. Die zu vermessenden technischen Oberflächen haben im Allgemeinen einen stetigen Verlauf und können eben oder beliebig gekrümmt sein. Die Oberflächen können aber auch Sprünge und Versätze aufweisen. Mit diesen Merkmalen bilden die technischen Oberflächen in ihren allgemeinen vielfältigen Formgestaltungen eine wesentliche Eigenschaft von technischen Komponenten. Die hochgradige Besonderheit deren Eigenschaften bezieht sich auf die Allgemeinheit der möglichen Formen, die Abmessungen der technischen Komponenten und die präzise Einhaltung der Formgenauigkeit. Als Anwendungsbeispiele für solche technischen Komponenten können beispielsweise die Kraftfahrzeugindustrie, die Turbinenindustrie oder die Optik angeführt werden. Dabei sind Anwendungen hochgenauer Messverfahren und diese umsetzende Präzisionsmessmaschinen für die Einzel- und Serienfertigung, zur Charakterisierung bei Herstellern und Anwendern, als auch für den Einsatz in Forschung und Entwicklung möglich. In der Kraftfahrzeugindustrie haben Kurbelwellen, Zylinder oder Kolben im Verlaufe der Technikentwicklung zunehmend komplizierte Funktionsflächen, die in ihrer Sollgestalt oder nach Verschleiß oder bei unterschiedlichen Temperaturbedingungen von exakten mathematischen Zylinderformen abweichen. Solche Abweichungen können zwar sehr gering sein, die Genauigkeitserfordernisse ihrer Bestimmung unterschreitet jedoch Messunsicherheiten von bis zu 10 nm. In der Turbinenindustrie werden die Formgestaltungen von Turbinenschaufeln, Ventilatoren oder Schiffsschrauben mit Methoden der Finite-Elemente-Rechnungen in sehr hoher Differenzierung optimiert. Die dabei erforderlichen Flächenformen als Freiformasphären lassen sich auf extrem genauen numerisch gesteuerten Werkzeugmaschinen fertigen, sodass die Bestimmung solcher Formabweichungen ebenfalls Messunsicherheiten von höchstens 10 nm erfordert. In der Optikfertigung und -prüfung besteht das Erfordernis der hochgenauen Formbestimmung von lichtleitenden oder -wandelnden Komponenten, wie es zum Beispiel Spiegel, Linsen, optische Gitter sind. Die traditionsgemäße Formmessgenauigkeit solcher Komponenten in der Größenordnung von 50 nm wird gegenwärtig in vielen Fällen jedoch mit bis zu 5 nm erforderlich. Hinzu kommt, dass gegenwärtig und zukünftig asphärische rotationssymmetrische oder nicht rotationssymmetrische Flächenformen zunehmend an Bedeutung gewinnen, bei denen hohe Genauigkeitsforderungen bestehen. Des Weiteren werden extreme Ausdehnungen von optischen Komponenten gebraucht. Für den Einsatz in der Forschung mit Synchrotronstrahlung sind asphärische Spiegel in rechteckiger Form von über 1000 mm Länge und höchstmöglicher Formgenauigkeit erforderlich. Die Anwendung von reflektierenden oder dispergierenden Komponenten für extremes ultraviolettes Licht in der Größenordnung der Wellenlängen 0,1 nm bis 10 nm beispielsweise für den Einsatz in der Photonenlithographie erfordert Genauigkeiten von asphärischen Flächen, die unter 1 nm liegen. Wegen der geforderten Genauigkeiten der Formen dieser Komponenten weisen deren Oberflächen vielfach solche Mikrorauheit auf, dass sie Licht reflektieren, also quasi poliert sind. Der Reflexionsgrad dieser Flächen richtet sich nach dem Material, aus dem die Komponenten bestehen oder nach ihrer Beschichtung.

Das Anwendungsgebiet der vorliegenden Erfindung erstreckt sich bezüglich des Reflexionsgrades der zu messenden Flächen in Wellenlängenbereichen des sichtbaren Lichts zwischen 100 %, wie bei Metall, zum Beispiel Stahl oder Gold, und 4 % wie bei optischem Glas oder auch noch darunter. Die Anwendungen berührungsfreier Messverfahren erstreckten sich weiterhin auf sehr empfindlich beschichtete Komponenten mit Schichtdicken von unter 100 nm, die durch berührende Messverfahren leicht verletzt werden könnten.

Aus dem Stand der Technik sind Messmaschinen mit einer Umsetzung von mechanisch oder optisch antastenden Messverfahren bekannt, die entweder die ganze zu vermessende Fläche gleichzeitig mit einer Referenzfläche vergleichen (interferometrische Messverfahren) oder die Fläche berührungsfrei punktweise abrastern (deflektometrische Messverfahren). Bekannt sind auch Messmaschinen mit mechanischen Antastungen. Hierzu zählt die aus der **DD 218 667 B1** bekannte Koordinatenmessmaschine, die zur Ausschaltung von Messabweichungen ein doppelseitig wirkendes, mechanisches Antastsystem aufweist, mit dem örtliche Differenzmessungen auf dem Prüfling und gegenüber einem realen oder virtuellen, referenzbildendem Bezugselement durchgeführt werden können. Die optischen interferometrischen Messverfahren benötigen Referenzflächen von der Gestalt der zu prüfenden Fläche, die für verschieden gekrümmte, beispielsweise asphärisch gekrümmte Flächen eine Vielzahl von unterschiedlichen Formen der Referenzflächen erforderlich macht. Die Referenzflächen begrenzen jedoch die Genauigkeit der Messergebnisse. In die Kategorie der optisch antastenden, deflektometrischen Messverfahren ist das beanspruchte Messverfahren einzuordnen. Das einfache, referenzfreie Abrastem von Flächen nach dem Deflektometrieverfahren schließt jedoch ebenfalls eine Reihe von systematischen und zufälligen Messabweichungen ("Messfehler") ein.

Aus der **DE 197 20 122 C2** ist ein referenzfreies, optisches Verfahren zur Ermittlung einer optischen Messgröße bekannt, das auf der Bildung einer Messgrößendifferenz an zwei Abtaststellen mit konstantem Abstand beruht.

Dieses Scherungsverfahren basiert prinzipiell auf der Erfassung einer Differenz zweier Messwerte unter Anwendung eines einzigen optischen Messverfahrens. Darauf basierend ist aus der **DE 198 33 269 C1** ein referenz- und kalibrierfreies Messverfahren und eine Messanordnung zur hochgenauen, bis in den Bereich einiger nm gelangenden Bestimmung der Topographie einer wenigstens nahezu planaren Oberfläche bekannt, bei der mit einem einzigen Messsystem zeitlich aufeinander folgend zwei Messungen zur Messung einer Winkeldifferenz durchgeführt werden. Durch die Anwendung des Grundprinzips der Differenzmessung werden systematische Messabweichungen, die additiv in die Messungen eingehen, eliminiert. Aus der genannten Druckschrift ist zwar auch bekannt, zur Erzeugung von Messstrahlen mit Scherungsabstand zur Durchführung solcher Differenzmessungen zwei Messgeräte zur Strahlerzeugung einzusetzen. Dies wird aber ausdrücklich als nachteilig beschrieben, da hierbei die entstehenden Abweichungen nicht kompensiert werden können. Als vorteilhaftes Messverfahren wird daher in der genannten Druckschrift die Winkelmessung mit einer durch ein Autokollimationsfernrohr (AKF) umgesetzten Messstrategie vorgeschlagen, bei dem als Strahlumlenkeinheit ein Pentagonalprisma verwendet wird. Ein solches Prisma ist weitgehend invariant gegenüber Neigungen seiner Spiegelflächen, weist jedoch Fertigungstoleranzen auf, die zu systematischen Messabweichungen führen können. Da zusätzlich bei der Messung Abweichungen durch eine unkorrekte Ausrichtung bezüglich des Winkels um die Achse in Abtastrichtung entstehen können, wird in der Druckschrift eine Anordnung vorgeschlagen, bei der zusätzlich zum messenden AKF zwei weitere AKF vorgesehen sind, die in Flucht mit dem messenden AKF und in der Ebene rechtwinklig dazu angeordnet sind. An dieser Stelle sei aber ausdrücklich darauf hingewiesen, dass beide AKF nicht der Messwertaufnahme dienen, sondern lediglich der Winkelkorrektur des Pentagonalprismas. Die Differenzmessung wird mit ein und demselben AKF durch eine Verschiebung des Messkopfes durchgeführt. Ziel der genannten Druckschrift ist gerade die Vermeidung des Einsatzes mehrerer Messsysteme zur Ermittlung von Differenzwerten.

Ein Kollimator ermöglicht auf kleinem Raum die Darstellung großer Abstände von Messmarken. Zusammen mit einem auf Unendlich eingestellten Femrohr kann er zur Bestimmung von Richtungsdifferenzen benutzt werden. In der zugrunde liegenden Messstrategie entwirft ein Fernrohrobjektiv ein Markenbild in der Brennebene. Wird hier die Fernrohrmarke, beispielsweise eine Winkelskala, angebracht, so kann die Richtungsdifferenz zwischen Kollimator- und Fernrohrachse aus der Verschiebung zwischen den Marken bestimmt werden. Eine Parallelversetzung beider Achsen hat dabei keinen Einfluss auf die Winkelmessung. Werden der Kollimator und das Fernrohr parallel dicht nebeneinander angeordnet und ein Planspiegel zur Strahlumlenkung sowie ein gemeinsames Objektiv verwendet, ergibt sich ein sogenanntes "Autokollimationsfernrohr" (AKF) mit geometrischer Strahlenteilung. Kippungen des Planspiegels aus der Lage rechtwinklig zur Objektivachse werden empfindlich angezeigt. Es ergibt sich gegenüber dem einfachen Kollimator eine doppelte Empfindlichkeit. Die beleuchteten Marken müssen beim AKF aufeinander abgestimmt sein. Unter anderem eignen sich Markenkombinationen zur Justierung und Scharfstellung. Bei einem Autokollimationsfernrohr mit physikalischer Strahlenteilung fallen Fernrohr- und Kollimatorachse bis zu einem Teilerwürfel zusammen. Hierbei handelt es sich um das Normalinstrument, das für die meisten Messaufgaben der genannten Art eingesetzt wird.

Auch aus der **DE 198 42 190 C1** ist ein Messverfahren und eine Anordnung zur Differenzmessung mit ein und demselben AKF durch eine Verschiebung des Messkopfes bekannt. Auch hier ist die Vermeidung des Einsatzes mehrerer Messsysteme zur Ermittlung von Differenzwerten das gestellte Ziel. Diese Druckschrift, von der die vorliegende Erfindung als **nächstliegendem Stand der Technik** ausgeht, befasst sich mit dem gleichen Problem, jetzt jedoch zur Bestimmung der Topographie von deutlich gekrümmten Oberflächen. Auch hierbei wird in einer Messanordnung ein AKF verwendet, das entlang einer Abtastlinie Messwerte zur Differenzbildung aufnimmt. Dabei wird zur Verbesserung der Genauigkeit der Abtaststrahl immer wieder senkrecht zur Abtastoberfläche eingestellt. Auch bei dieser Anordnung können zwei weitere AKF zur Winkelkorrektur des verwendeten Pentagonalprismas als Umlenkeinheit verwendet werden, die jedoch ebenfalls nicht zur direkten Messwertermittlung benutzt werden, sondern als Nullindikator dienen und damit nicht als Messsysteme zu betrachten sind. Allerdings wird in dieser Druckschrift auch eine Anordnung zur Differenzbildung mit zwei AKF zur Erzeugung von zwei getrennten Messstrahlen und zwei Strahlumlenkeinheiten, zur Messung von jeweils einer Winkellage genannt. Durch die Verwendung von zwei AKF wird jedoch bei dieser Anordnung trotzdem nur eine einzige Messstrategie angewendet. Darüber hinaus wird in der Druckschrift explizit darauf hingewiesen, dass die prinzipiellen Abweichungen durch die unvermeidlichen Abweichungen der synchronen Führung der beiden Messköpfe bzw. Umlenkeinheiten in einer Größenordnung eingehen, die eine erhebliche Begrenzung der erzielbaren Genauigkeit mit sich bringt. Somit wird auch in dieser Druckschrift die Verwendung eines einzigen Messsystems mit einer Verschiebung des Messstrahls über eine Umlenkeinheit zwischen den differenzbildenden Messpunkten bevorzugt, da additive systematische Abweichungen so in beide Winkelmessungen eingehen und bei der Differenzbildung somit weitgehend herausfallen. Weiterhin wird in der Druckschrift offenbart, dass durch Verwendung einer Blende mit zwei Aperturen im AKF die zur Differenzmessung erforderlichen beiden Messstrahlen aus einem gemeinsamen Strahl gebildet werden können. Damit ist es bekannt, dass ein AKF nicht nur einen, sondern zumindest auch zwei Messstrahlen aussenden kann.

Trotz der genannten Maßnahmen können mit den bekannten Messverfahren und -anordnungen aufgrund der auftretenden systematischen Messabweichungen nicht Messgenauigkeiten eingehalten werden, wie sie insbesondere für optische Komponenten mit Abmessungen zwischen 30 mm und 1200 mm und mit stärkeren Krümmungen zunehmend in innovativen Anwendungen erforderlich werden. Hierbei ist als technisches Ziel eine Genauigkeit in der von der Idealform abweichenden Messung von Neigungswinkeln von 0,01 Winkelsekunden zu nennen, das jedoch in der Praxis derzeit nicht erreichbar ist. Erzielbare 0,08 Winkelsekunden sind jedoch wiederum nicht ausreichend, sodass als **Aufgabe** für die vorliegende Erfindung das Erreichen einer mittleren Messgenauigkeit von kleiner als 0,01 Winkelsekunden rms (kleiner 50 nrad rms) bei der Erfassung der mittleren Neigungsabweichungen von technisch polierten Oberflächen anzusehen ist. Dabei soll die Vielfalt der zu messenden Prüflings- und Komponentenformen und die hohe Empfindlichkeit der zu messenden Flächen Berücksichtigung finden. Weiterhin soll ein kurzzeitiger und automatischer Messablauf sowie ein flexibler Maschineneinsatz möglich sein. Die erfindungsgemäße Lösung für diese Aufgabe ist dem unabhängigen Verfahrensanspruch 1 und dem unabhängigen Anordnungsanspruch 8 zu entnehmen. Vorteilhafte Ausführungsformen der Erfindung sind den jeweiligen abhängigen Ansprüchen zu entnehmen. Diese werden im Folgenden im Zusammenhang mit der Beschreibung der Erfindung näher erläutert.

Wesentlicher Grundgedanke bei dem erfindungsgemäßen Messverfahren und der dieses umsetzenden erfindungsgemäßen Präzisionsmessmaschine ist die Kombination von zwei oder mehr unterschiedlichen Messstrategien bzw. optischen Messsystemen in einer Hybridanordnung. Die Betrachtung des Standes der Technik zeigt, dass es sich hierbei um eine ungewöhnliche Maßnahme handelt, die bei der Erfindung einen überraschend großen Erfolg mit sich bringt. Im Gegensatz zur bekannten Lehre, mehrere Messstrategien bzw. -systeme möglichst zu vermeiden, wobei hier aus dem Stand der Technik auch nur die Verwendung gleichartiger Messsysteme bekannt ist, lehrt die Erfindung die gezielte Kombination von zwei oder mehr Messstrategien unter Anwendung von speziellen, aber an sich bekannten Mess- und Auswertestrategien und entsprechend von mehreren, in ihren auftretenden systematischen Messabweichungen möglichst unterschiedlichen Messsystemen. Dabei kann es sich bevorzugt um eine Kombination der Kollimations-Messstrategie mit der Oberflächenprofil-Messstrategie handeln. Mit Hilfe eines die entsprechende Messstrategie bevorzugt umsetzenden AKF und eines Long-Trace-Profilometers (LTP) werden bei dem Einsatz von zumindest zwei unterschiedlichen Messsystemen gleichzeitig identische Messorte oder zeitlich und/oder örtlich versetzte Messorte angetastet, um aus der differenzierten Betrachtung der gewonnenen Messergebnisse zu dem geforderten hochgenauen Messresultat zu gelangen. Dabei wird ausgenutzt, dass das LTP immer zwei Messstrahlen zur Verfügung stellt (wobei vorteilhaft der Referenzstrahl gemäß einer Erfindungsausgestaltung durch eine Umlenkung des Referenzstrahls bei der Oberflächenprofil-Messstrategie bzw. LTP als Messstrahl auf den Prüfling genutzt werden kann), das AKF in der Regel einen Messstrahl. Es sind aber auch Ausführungen aus dem Stand der Technik bekannt, die zumindest zwei Messstrahlen verwenden (vergleiche **DE 198 42 190 C1**). Ein derartiges AKF mit zwei oder auch mehr Messstrahlen, die jeweils einen festen Winkel zueinander einschließen, kann vorteilhaft bei der Erfindung verwendet werden, um die Anzahl der differierenden Messpunkte für diese Messstrategie zu erhöhen. Eine weitere Unterscheidung der Zugehörigkeit der einzelnen Messstrahlen zu der jeweiligen Messstrategie bzw. zum jeweiligen Messsystem kann gemäß einer anderen Erfindungsausgestaltung durch eine Verwendung von Messstrahlen mit verschiedenen Wellenlängen erfolgen, die unter entsprechender Filterung detektiert und der jeweiligen Messstrategie zugeordnet werden. Somit können auf einfache Weise detektierte Messstrahlen an ein und demselben Messort und zum gleichen Messzeitpunkt trotzdem den unterschiedlichen Messsystemen zugeordnet werden. Grundsätzlich sind bei dem Messverfahren nach der Erfindung verschiedene Messstrategien mit unterschiedlichen Auflösungsvermögen einsetzbar. Sollen die verwendeten Messstrategien jedoch ein gleiches Auflösungsvermögen gewährleisten, ist gemäß einer Erfindungsfortführung eine Erzeugung nahezu gleich großer Antastorte durch die verwendeten Messstrahlen von Vorteil. Durch Verwendung von identischen Aperturen werden dann gleiche Messstrahldurchmesser erzeugt.

Der Abtastung zeitlich und/oder örtlich versetzter Messorte mit unterschiedlichen Messstrahlen von nahezu gleichem Strahldurchmesser liegt die Erkenntnis zugrunde, dass während eines Messablaufs oder als Teil des Ergebnisses einer jeden Messung eine ständige Analyse der vielfältigen Messabweichungseinflüsse, die sich nach zufälligen und systematischen Fehlern unterscheidet, erforderlich ist. Die zufälligen Abweichungen sind ständig während des Messablaufs zu ermitteln, zu analysieren und gegebenenfalls als Regelgröße in den Korrekturprozess für die sie verursachenden Bedingungen in den Messablauf und in das Messresultat einzubeziehen. Dabei ist es vorteilhaft, wenn gemäß einer nächsten Erfindungsausgestaltung bei einer computergestützten Steuerung der verschiebbaren Elemente ein kombiniertes Zusammenwirken mit den mittels der zumindest zwei unterschiedlichen Messstrategien erfassten Messwerten in speziellen Mess- und Justierprogrammen nach halb- oder vollautomatischen Mess- und Prüflingsjustierstrategien und eine Ablage der Mess- und Positionswerte in einer Speichereinheit erfolgt. Dafür sind die messtechnischen Voraussetzungen zu schaffen, um die zufälligen Anteile aus den verschiedenen Messwerten zu minimieren. Dazu bietet die erfindungsgemäße Präzisionsmessmaschine in ihrer das kombinierte Messverfahren umsetzenden, grundsätzlichen Konzeption und in ihren bevorzugten, vorteilhaften Ausführungsformen eine Reihe von effektiven Maßnahmen an. Es zählen insbesondere die gesamte konstruktive Gestaltung der beanspruchten Präzisionsmessmaschine dazu und die Vermeidung oder Minimierung von Umwelteinflüssen. Dadurch und durch die Möglichkeit einer schnellen Aufnahme einer Vielzahl von Messwerten sind die zufälligen, statistisch auftretenden Messabweichungen gut beherrschbar, sodass ihr Einfluss auf die Messgenauigkeit zuverlässig eliminiert werden kann. Grundsätzlich anders verhält es sich mit den systematischen Messabweichungen, die nach ihren möglichen Ursachen zu erfassen sind. Durch die Kombination zweier unterschiedlicher Messstrategien sind diese bei der erfindungsgemäßen Präzisionsmessmaschine jedoch deutlich erkennbar und durch Anwendung allgemein bekannter Auswertungsstrategien, beispielsweise der Differenzbildung, kompensier- respektive minimierbar. Dabei ist zu bemerken, dass insbesondere auch Messabweichungen höherer Ordnung, die bei derartig genau zu bestimmenden Messwerten unbedingt zu berücksichtigen sind, bei gleichen Umgebungsbedingungen für beide Messsysteme von dem Messverfahren nach der Erfindung miterfasst werden.

Das Long-Trace-Profilometer (LTP) ist ein beispielsweise aus dem Basispatent **US 4.884.697** bekanntes optisches Messgerät zur Überprüfung der Oberflächenform wenig oder nicht gekrümmter optischer Oberflächen großer Ausdehnungen und höchster Genauigkeit. Das LTP arbeitet nach der Oberflächenprofil-Messstrategie mit einem Doppelstrahl (jeweils für Mess- und Referenzstrahl), dessen Reflexionen am Prüfling am Orte eines Zeilendetektors erfasst werden. Es wird am Ort des Sensors ein Interferenzbild erzeugt, dessen Ort auf dem Detektor ein Maß für die Neigung des Prüflings am jeweils angetasteten Ort ist. Mit dem LTP, das genau wie das AKF mit einer Laserquelle betrieben werden kann, werden somit die Neigungen eines Prüflings entlang einer geraden Messbahn unmittelbar gemessen. Damit wird auch der prinzipielle Unterschied zur Messstrategie des AKF sichtbar. Das AKF kann grundsätzlich zwei rechtwinklig zueinander stehende Winkelwerte messen und diese korrelieren, wohingegen das LTP in seiner allgemeinen Anwendung nur in der Längsrichtung der Prüflings misst, jedoch mit einem größeren Winkelmessbereich. Insbesondere bei sphärisch gekrümmten Oberflächen kann somit durch den Einsatz des LTP der Messbereich vergrößert und auch eine größere Prüflingsausdehnung gemessen werden. Dabei kann durch die kleinen, an die Messstrahlen des LTP angepassten Aperturen des AKF und durch die Punktmessungen des LTP durch geringe, aber bei allen Messstrahlen nahezu übereinstimmende Durchmesser eine besonders hohe Ortsauflösung bei dem Messverfahren bzw. der Präzisionsmessmaschine nach der Erfindung erreicht werden. Diese wiederum garantiert auch die zur Eliminierung der zufälligen Messabweichungen wichtige Menge an Messwerten und eine Erfassung aller Oberflächenneigungen auch in kleinsten Bereichen.

Das hochgenaue Messverfahren und die Präzisionsmessmaschine nach der Erfindung, die aufgrund ihrer erreichbaren Messgenauigkeit bis in den Subnanometerbereich auch als "Ultrapräzisionsmessmaschine" bezeichnet werden kann, ermöglichen nun durch die prinzipielle Kombination zweier verschiedener Messstrategien bzw. -systeme und durch eine Reihe von zusätzlich vorteilhaften Ausgestaltungen Anwendungen in einem weiten Feld. So kann die Grundformenvielfalt der zu messenden Prüflingsflächen einen sehr weiten Bereich möglicher stetiger Flächenformen überdecken. Es können beispielsweise Flächen, Zylinderflächen, Kugelflächen, rotationssymmetrische asphärische Flächen, nicht rotationssymmetrische asphärische Flächen, Flächen mit Kegelschnittgrundform wie Ellipsoide, Toroide, Paraboloide oder elliptische Zylinder, aber auch Freiformasphären oder auch Prüflinge mit unterbrochenen oder an einer scharfen Trennlinie "geknickten" Flächen in ihren Neigungsabweichungen von der Ebene vermessen werden. Im Allgemeinen soll die stetig verlaufende Krümmung der zu messenden Flächen geringen lokalen Krümmungsänderungen ausgesetzt sein. Stärkere Krümmungen können aber durch Nutzung besonderer, an sich bekannter Messstrategien ebenfalls gemessen werden. Die Vielfalt der zu messenden Komponentenformen beschränkt sich nicht nur auf kreisförmig runde Teile mit zylindrischem Rand, sondern umfasst auch rechteckige oder runde Flächenbegrenzungsformen auch mit einem extremen Verhältnis von Länge zu Breite beziehungsweise Länge zu Dicke. Die Empfindlichkeit der zu messenden Flächen wird durch die beiden rein optisch antastenden Messsysteme bezüglich der Verletzungsgefahr besonders bei beschichteten Flächen und bezüglich der Sauberkeit zur Qualitätserhaltung für den Einsatz im Ultrahochvakuum besonders berücksichtigt. Der optische, von Null verschiedene Reflexionsgrad der zu messenden Oberflächen kann beispielsweise zwischen 4 % und 100 % liegen. Bei hochempfindlichen Detektoren kann er auch unterhalb von 4% liegen. Der erforderlichen Messgenauigkeit angepasste kurzzeitige Messungen sind problemlos durchführbar, insbesondere auch durch die für eine industrielle Serienfertigung besonders geeignete Automatisierbarkeit beider eingesetzter Messsysteme bezüglich des Messablaufes und bezüglich der Auswechslung, Justage und Führung des Prüflings. Dabei kann die Messgeschwindigkeit der erforderlichen Genauigkeit ohne Weiteres angepasst werden.

Die Verwendung von zwei verschiedenen optischen Messstrategien bzw. Messsystemen gewährleistet das Auftreten von unterschiedlichen systematischen Messabweichungen. Daher müssen die mit beiden Messsystemen an zwei Antastorten gewonnenen Messwerte in der Auswertungseinheit nur noch mit geeigneten Auswertungsstrategien zu einem gemeinsamen Messergebnis verarbeitet werden, um die systematischen Fehler zuverlässig zu eliminieren. Somit ist es von ausschlaggebender Bedeutung, dass unterschiedliche systematische Messabweichungen auftreten. Mit gleichen systematischen Messabweichungen, wie sie bei der Verwendung von zwei identischen Messstrategien bzw. -systemen auftreten, kann keine bis in den geforderten Genauigkeitsbereich reichende Messgenauigkeit erzielt werden. Damit zeigt die Erfindung, dass gerade die Weiterbildung eines im Stand der Technik als nachteilig und damit vermiedenen Konzepts durch die Verwendung von zwei verschiedenen Messstrategien bzw. Messsystemen in einer Hybridanordnung zum Ziel führt. Die mit dem Messverfahren bzw. der Präzisionsmessmaschine nach der Erfindung hochgenau erzielbaren Messergebnisse, die im speziellen Beschreibungsteil näher erläutert werden, bestätigen dieses Konzept. Für die Korrelation in der Auswertungseinheit sind geeignete, aber an sich bekannte Auswertestrategien der Autokalibrierung und der Reduzierung zufälliger und systematischer Messabweichungen aus den unterschiedlichen Messstrategien des Autokollimationsfernrohres und des Long-Trace-Profilometers auszuwählen und gegeneinander aufzuwiegen. Für die Autokalibrierung der beiden Messsysteme sind verschiedene Verfahren bekannt. Beispielsweise kann der Prüfling mehrfach abgetastet werden. Dabei kann der Prüfling zwischen den Abtastdurchgängen um 90° oder um 180° gedreht werden. Weiterhin können verschiedene Abtastbahnen parallel gefahren werden. Darüber hinaus können insbesondere die Neigungswinkel an gleichen oder unterschiedlichen Prüflingsorten zum gleichen oder zu unterschiedlichen Zeitpunkten gemessen werden. Dabei birgt die Aufnahme von zwei Messwerten an einem Messort zu einer Messzeit sicherlich die geringsten Messabweichungen, wohingegen bei der zeitlich verschobenen Messung an zwei unterschiedlichen, zur Ermittlung eines gemeinsamen Messergebnisses aber noch ausreichend korrelierenden Messorten die größten Messabweichungen in das Auswerteverfahren einbringt. Schließlich können auch die unterschiedlichen Ausprägungen der beiden verwendeten Messsysteme in geeigneter Weise kombiniert werden. Beispielsweise können alle drei Messstrahlen der beiden Messsysteme (ein Messstrahl vom AKF und zwei Messstrahlen vom LTP, wobei der zweite Messstrahl der umgelenkte Referenzstrahl sein kann) oder auch nur zwei Messstrahlen, von jedem Messsystem ein Messstrahl, zur Auswertung herangezogen werden. Die auswertende Korrelation der erfassten Messwerte kann beispielsweise in einfachster Form durch eine Mittelwertbildung erfolgen. Dabei werden die Einflüsse der beiden verschiedenen Messsysteme mit einem Anteil von je 50% in die Gewichtung einbezogen. Ebenso ist auch eine Differenzbildung möglich, wie sie eingangs im Zusammenhang mit dem Begriff der Scherungsinterferometrie näher erläutert wurde. Am Ende ist aber die korrelierende Verarbeitung von mehreren Messwerten zu einem gemeinsamen Messergebnis eine für den Fachmann aus seiner Erfahrung heraus allgemein bekannte und lösbare Aufgabe. Insbesondere durch eine rechnerunterstützte Auswertung kann hier wesentliche Erleichterung bei der Umsetzung der erforderlichen Algorithmen geschaffen werden.

Eine Reihe von konstruktiven Maßnahmen bezüglich der optischen und mechanischen Anordnungen verbessert noch die Messgenauigkeit der beanspruchten Präzisionsmessmaschine nach der Erfindung. Hierzu zählt beispielsweise die fluchtende Ausrichtung der optischen Achsen der beiden Messsysteme, sodass kein Versatz bei der Strahlumlenkung berücksichtigt werden muss. Weiterhin spielt die Ausprägung der Spiegelumlenkeinheiten eine bedeutsame Rolle. Vorteilhafterweise können die Strahlumlenkeinheiten aus zwei reflektierenden ebenen Spiegelflächen bestehen, die fest mit einer Orientierung der Schnittkanten rechtwinklig zur Verschiebungsrichtung des Messtranslationsschlittens zueinander angeordnet sind. Dadurch wird eine große Invarianz gegenüber Verkippungen der Spiegelebenen erreicht. Gemessen werden soll ja nur die auftretende Neigungsabweichung an der polierten Oberfläche des Prüflings. Weiterhin können die Strahlumlenkeinheiten aus Doppelspiegeln bestehen, deren reflektierende Flächen einen Winkel δ = 45° zueinander aufweisen und deren Flächennormale jeweils in δ/2 zu den ausgesendeten Messstrahlen der beiden Messsysteme und zu den von der Oberfläche des Prüflings reflektierten Messstrahlen angeordnet ist. Dadurch werden Inhomogenitätseinflüsse vom optischen Glas des Pentagonalprismas vermieden. Optional können die reflektierenden Flächen auch einen vom Winkel δ = 45° verschiedenen Winkel einnehmen (±α, ±β), wobei deren Flächennormale dann auch um den entsprechenden halben Winkel verschieden zum Messsystem und zu dem vom Prüfling reflektierten Messstrahl angeordnet sind. Beide geometrischen Anordnungen können einfach in die Auswertestrategie einbezogen werden. Schließlich ist es von besonderem Vorteil, wenn die Strahlumlenkeinheiten als Pentagonalprismen ausgebildet sind. Deren Invarianz gegenüber Verkippungen ist allgemein bekannt. Zusätzliche optische Einrichtungen zur hochgenauen Justage des Pentagonalprismas entfallen somit bei der Präzisionsmessmaschine nach der Erfindung.

Einen besonderen Einfluss auf die zufälligen Messabweichungen und damit auch auf die erreichbare Messgenauigkeit haben die Umwelteinflüsse auf das Messverfahren bzw. auf die Präzisionsmessmaschine. Obwohl zufällige Messabweichungen durch eine Vielzahl von Messwerten weitgehend eliminiert werden können, ist die weitgehende Vermeidung von zufälligen Messabweichungen von Vorteil. Zu den diesbezüglichen Maßnahmen zählt beispielsweise, dass die freien Lichtwege durch längenvariable und feste Luftabtrennvorrichtungen geschützt sind. Somit können störende Luftturbulenzen um und in den Lichtstrahlen verhindert werden. Weiterhin hat der konstruktive Aufbau der Maschine über verschiedenen Schlitten in bezug auf das Lagern und Verfahren des Prüflings und das Verfahren der optischen Umlenkeinheiten einen bedeutenden Einfluss. Beispielsweise kann der Messtranslationsschlitten von einem gesonderten Antriebsschlitten verschoben werden und die Verbindung der beiden Schlitten über eine Kupplung erfolgen, die in den rotatorischen Verschiebungsrichtungen elastisch aufgebaut ist. Dadurch können Störeinflüsse, beispielsweise durch Erschütterungen infolge des Schlittenantriebssystems, von der elastischen Kupplung kompensiert werden. Weiterhin kann durch orthogonale und parallele Ausrichtung der verschiebbaren Elemente zueinander und zu den Messstrahlen, beispielsweise durch eine Anordnung des Positionsschlittens rechtwinklig zum Messtranslationsschlitten, dessen Tischfläche parallel zur Verschiebungsfläche und rechtwinklig zu der Richtung der Messstrahlen ausgerichtet ist, die Messgenauigkeit weiter verbessert werden. Gleiches gilt für eine Anordnung, bei der auf der Tischfläche des Positionsschlittens ein Wagen angeordnet ist, dessen Führungsrichtung parallel zum Messtranslationsschlitten angeordnet ist.

Ein weiterer Einflussfaktor ist die Lagerung und Verschiebung des Prüflings. Dazu ist es vorteilhaft, wenn ein Präzisionsdrehtisch auf dem Wagen befestigt angeordnet ist, dessen Drehachse orthogonal zu den Verschiebungsrichtungen sowohl des Messtranslationsschlittens als auch des Wagens angeordnet ist. Weiterhin kann der Präzisionsdrehtisch eine schwenkbare Rotationsachse mit einer zusätzlichen Umsetzung einer Schwenkbewegung aufweisen. Zur Lagerung des Prüflings auf dem Präzisionsdrehtisch kann dieser eine Aufnahme- und Justiervorrichtung für den Prüfling aufweisen, die aus einem Aufnahmetisch mit drei in einem rechtwinkligen, gleichschenkligen oder gleichseitigen Dreieck angeordneten Auflagestützen besteht, von denen mindestens zwei höhenverstellbar sind, und dessen ebene Tischfläche parallel zur Tischfläche des Querschlittens angeordnet ist und mit den höhenverstellbaren Stützen um die rechtwinklig zueinander liegenden Verschiebungsachsen der beiden Schlitten verkippt werden kann.

Zur weiteren Güteverbesserung der Präzisionsmessmaschine nach der Erfindung ist auch eine Kontrolle der eingestellten Positionen von Vorteil. Dazu können die verschieblichen Elemente mit Messsensoren zur jeweiligen Positionsbestimmung ausgerüstet sein. Zur präzisen Positionseinstellung ist es außerdem von Vorteil, wenn die verschieblichen Elemente mit elektrischen Antriebssystemen ausgerüstet sind. Darüber hinaus können im Messverfahren vorteilhaft die Verschiebungen der verschieblichen Elemente computergestützt im Zusammenwirken mit den Messwertausgaben der beiden Messsysteme in speziellen Mess- und Justierprogrammen nach halb- oder vollautomatischen Mess- und Prüflingsjustierstrategien kombiniert durchgeführt und die Mess- und Positionswerte in einer Speichereinheit abgelegt werden. Weiterhin ist es vorteilhaft, die wärmeabgebenden Elemente zu vermeiden oder in ihrer Wärmeabgabe zu minimieren, um die thermischen Einflüsse möglichst gering zu halten. Dazu können alle Antriebs- und Messsysteme mit sehr geringer elektrischer Verlustleistung betrieben werden und während der Messabläufe nur ein Antriebssystem und die Messsysteme in Funktion sein. Besonders verlustarm und reibungsfrei ist eine Ausführung der verschiedenen Lagerungssysteme als Luftlager. So, wie die Positionen und Lagen von Prüfling und allen verschieblichen Elementen von Sensoren erfasst werden können, können sich darüber hinaus an empfindlichen Maschinengruppen Sekundärsensoren zur Feststellung von Temperaturdifferenzen, Schwingungen, Luftfeuchtigkeit und Luftdruck befinden, deren Messwerte in die Auswertung einbezogen werden. Schließlich kann die gesamte Präzisionsmessmaschine zur Entkopplung von der Umwelt und damit von störenden Umwelteinflüssen von einem temperaturisolierenden, weitgehend luftundurchlässigen Gehäuse umfasst sein.

**Ausbildungsformen der Erfindung** werden nachfolgend anhand der schematischen Figuren zum weiteren Verständnis der Erfindung näher erläutert. Dabei zeigen :
- **Figur 1**: den prinzipiellen Aufbau der Präzisionsmessmaschine nach der Erfindung,
- **Figuren 2 bis 10**: verschiedene Antastvarianten der beiden Messsysteme,
- **Figur 11 a**: ein ermitteltes Oberflächenrelief eines ebenen Plangittersubstrats,

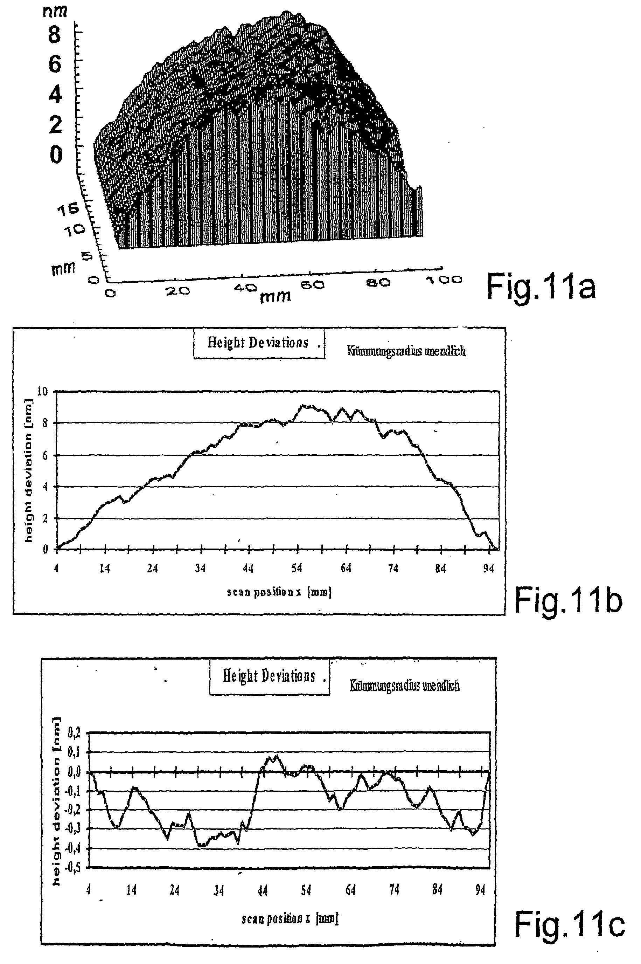

- **Figur 11 b**: ein Mittelscan auf dem Plangittersubstrat gemäß Figur 11 a
- **Figur 11 c**: die Reproduzierbarkeit der Messergebnisse auf dem Plangittersubstrat gemäß Figur 11 a,

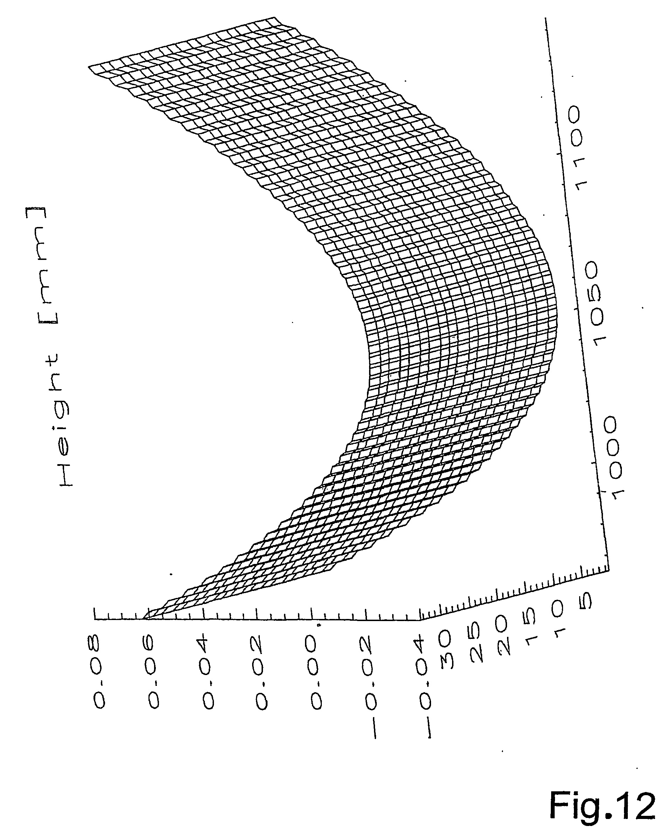

- **Figur 12**: ein Messergebnis an einem elliptischen Zylinder,

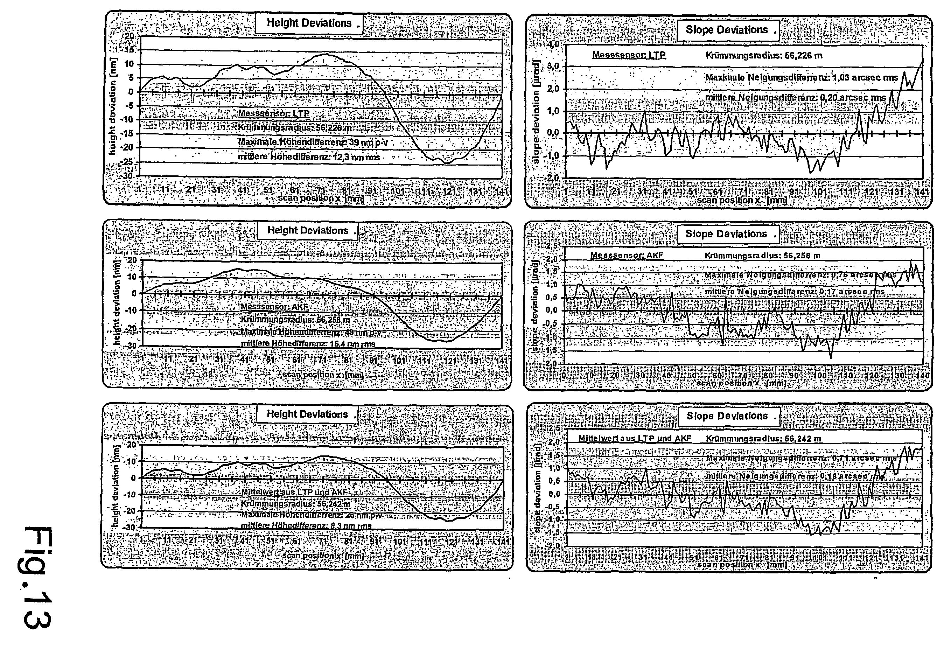

- **Figur 13**: einen Vergleich von Messergebnissen und

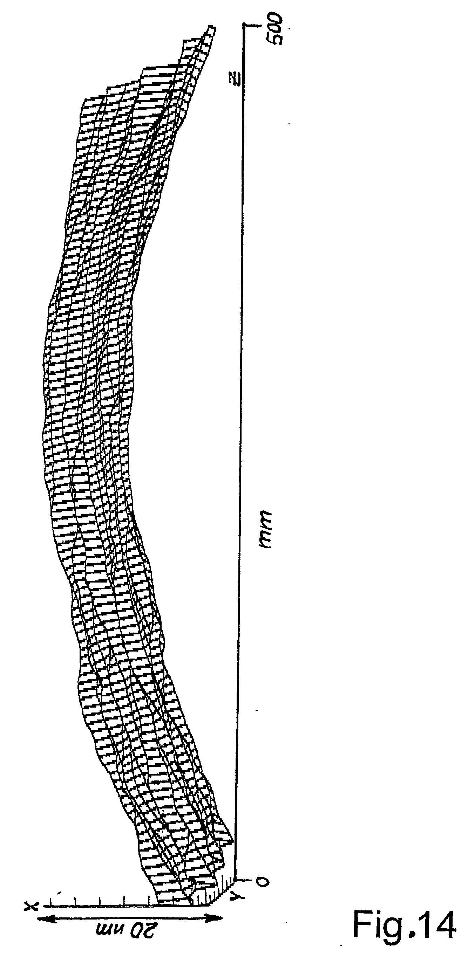

- **Figur 14**: eine Höhenprofil-Darstellung.

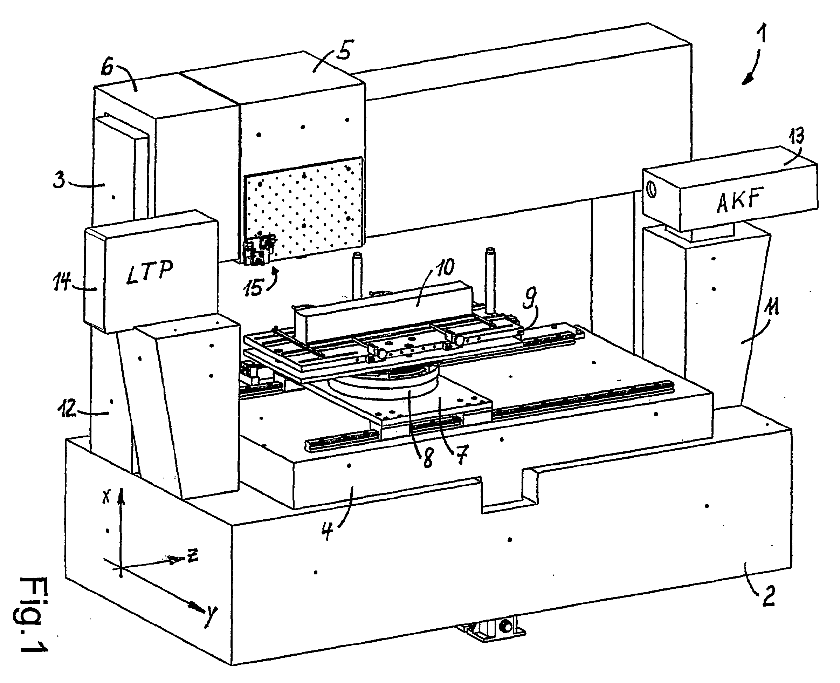

Die **Figur 1** zeigt eine Präzisionsmessmaschine **1** nach der Erfindung mit einer erreichbaren Messgenauigkeit bis in den Subnanometerbereich (0,01 Winkelsekunden rms oder entsprechend 0,3 nm rms im Mittel). Diese besteht aus einer Gesteins-Basis **2** (beispielsweise Granit), auf der eine Gesteins-Traverse **3** aufgebaut ist. Über die Tiefe der Gesteins-Basis **2** (y-Richtung) kann ein Positionsschlitten **4** rechwinklig zu einem Messtranslationsschlitten **5** über eine Luftlagerung verschoben werden. Der Messtranslationsschlitten **5** ist an der Gesteins-Traverse **3** gelagert und kann über die Stützweite der Gesteins-Traverse **3** (x-Richtung) verschoben werden. Dazu dient ein Antriebsschlitten **6**, der ebenfalls auf der Gesteins-Traverse **3** läuft. Auf dem Positionsschlitten **4** ist rechtwinklig zum Messtranslationsschlitten **5** ein Wagen **7** angeordnet, dessen Tischfläche parallel zur Verschiebungsfläche und rechtwinklig zu der Richtung der umgelenkten Messstrahlen (s.u.) ausgerichtet ist. Auf dem Wagen **7** ist ein Präzisionsdrehtisch **8** angeordnet, der eine schwenkbare Rotationsachse zur Umsetzung von Schwenk- und Drehbewegungen durch ein Lagerpaar aufweist. Über eine mehrfach verstellbare Aufnahme- und Justiervorrichtung **9** ist auf dem Präzisionsdrehtisch **8** im gewählten Ausführungsbeispiel ein balkenförmiger Prüfling **10 (P)** gelagert.

An den Seiten der Präzisionsmessmaschine **1** sind auf Gesteins-Konsolen **11**, **12**, die auf der Gesteins-Basis **2** aufliegen, zwei Messsysteme **13, 14** einander gegenüberliegend und aufeinander zuzeigend sowie in ihren optischen Achsen fluchtend angeordnet. Bei dem rechten Messsystem **13** handelt es sich um ein Autokollimationsfernrohr **AKF,** bei dem linken Messsystem **14** um ein Long-Trace-Profilometer **LTP**, das bekanntermaßen mit einer sich vom **AKF** grundlegend unterscheidenden Messstrategie arbeitet. Durch eine geeignete Korrelation der mit beiden Messsystemen **13, 14** gewonnenen Messwerte in einer in der Figur nicht weiter dargestellten Auswertungseinheit können somit - wie in der allgemeinen Beschreibung bereits ausführlich erläutert - systematische Messabweichungen minimiert und hochgenaue Messergebnisse erzielt werden. In beiden Messsystemen **13, 14** sind die Messstrahlen auf Strahlumlenkeinheiten **15 (M)** gerichtet, die mit dem verschiebbaren Messtranslationsschlitten **5** verbunden sind und zur Umlenkung der Messstrahlen auf den Prüfling **10** dienen. Bei den Strahlumlenkeinheiten **15** kann es sich um zwei in einem vorgegebenen Winkel zueinander ausgerichtete Spiegel, insbesondere auch um Pentagonalprismen, handeln, die besonders invariant gegenüber geringfügigen Spiegelverkippungen sind. Verschiedene Möglichkeiten der Ausführung der Strahlumlenkeinheiten **15**, und der Messsträhinutzung sind in den folgenden Figuren beschrieben. Der einfachste Fall einer gemeinsamen Strahlumlenkeinheit **15** für alle Messstrahlen sei hier der Vollständigkeit halber erwähnt.

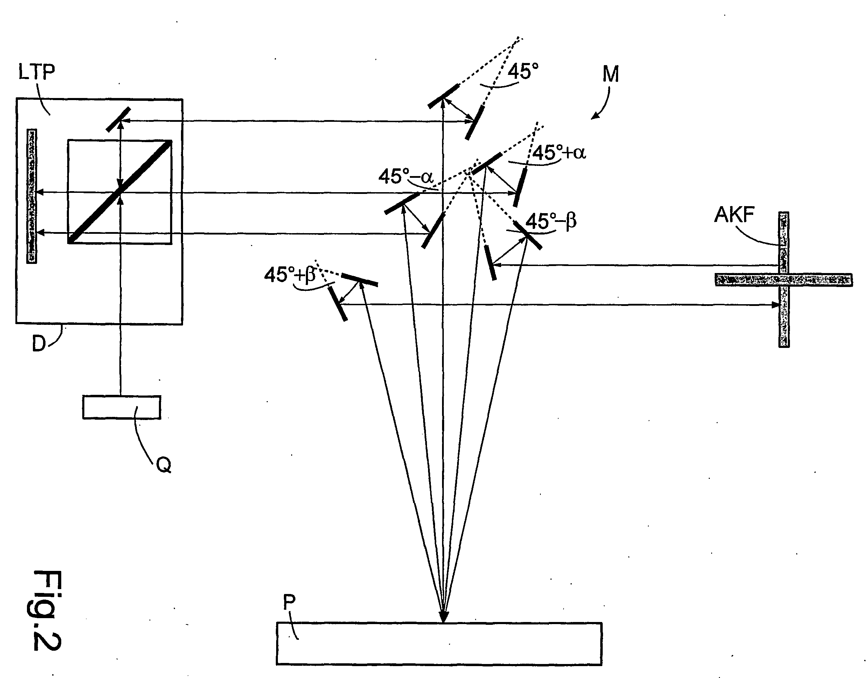

Die **Figuren 2 bis 10** zeigen verschiedene Möglichkeiten des Aufbaus der Strahlumlenkeinheiten **M**, der Nutzung der Messstrahlen der beiden Messsysteme **AKF** und **LTP** und der Antastvarianten an einem oder an mehreren Messpunkt(en). Bekanntermaßen sendet das **AKF** in der Regel einen Messstrahl, das **LTP** hingegen zwei Messstrahlen aus, wobei ein Messstrahl auch aus dem dem **LTP** eigenen Referenzstrahl gebildet werden kann. Gezeigt sind jeweils schematisch die Detektionsebenen von **AKF** (zwei Ebenen) und **LTP** (in der Regel eine Ebene). Beide Messsysteme benötigen eine Lichtquelle zur Erzeugung der Messstrahlen. Hierbei handelt es sich bevorzugt um einer Laserlichtquelle. Diese ist kann beim **AKF** integriert sein und ist daher in den Figuren nicht weiter dargestellt, das **LTP** enthält einen größerem Laser, der aufgrund seiner störenden Wärmeentwicklung nicht in das eigentliche **LTP** integriert ist, sondern außerhalb gelagert ist. Dieser Umstand wird mit der Darstellung der Lichtquelle **Q** in den Figuren angezeigt. Hinter der Lichtquelle **Q** befindet sich ein Strahlteiler **D** zur Erzeugung der beiden Messstrahlen des **LTP**. Die entsprechenden Winkel der Spiegel zueinander in den Strahlumlenkeinheiten **M** sind in den Figuren dargestellt. Dabei ist mit dem Winkel von 45° (δ) als Basiswinkel der Fall des senkrechten Lichteinfalls auf die Prüflingsoberfläche eingezeichnet. Zur Veränderung dieses Basiswinkels zur Erreichung von schrägem Lichteinfall sind Winkel α, β für die beiden Messsysteme **AKF** und **LTP** eingetragen, die an den verschiedenen Strahlumlenkeinheiten **M** entsprechend gegenläufig angeordnet sein müssen (±α,±β). Weiterhin ist in den Figuren auf die Pfeilrichtungen zu achten, um die ausgesendeten Messstrahlen von den reflektierten unterscheiden zu können. Orthogonal auf die polierte Oberfläche des Prüflings **P** auftreffende Messstrahlen werden dabei in sich reflektiert. Die nicht orthogonal auf die Oberfläche des Prüflings **P** gerichteten Messstrahlen können durch geeignete Modifikation der Strahlumlenkeinheit **M** auf die Detektoren zurückgeführt werden. Dabei können die gezeigten Antastungen zeitgleich oder auch zeitversetzt oder ortsgleich oder ortsversetzt oder in freier Kombination von Zeit und Ort stattfinden. Hier erfolgt die Auswahl in Abhängigkeit von den aktuellen Umgebungsbedingen und weiteren Einflussparametern (Verfahrgeschwindigkeit, Anzahl der Messungen, Auswertung u.ä.).

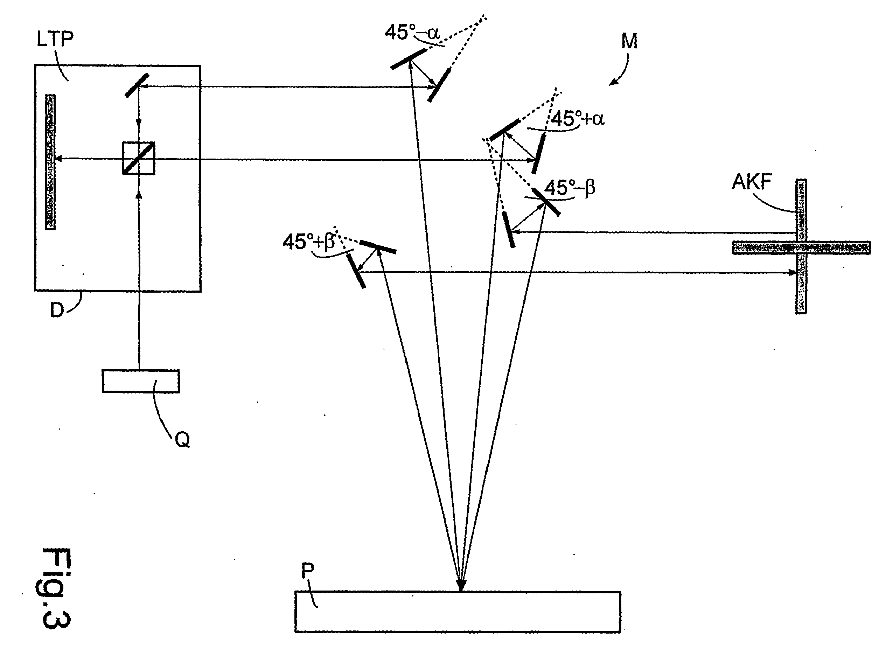

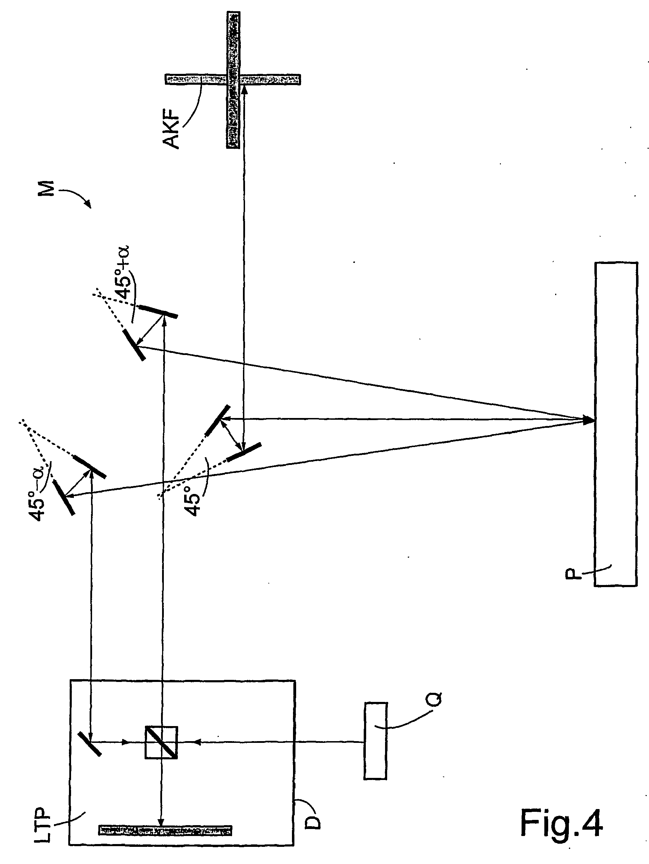

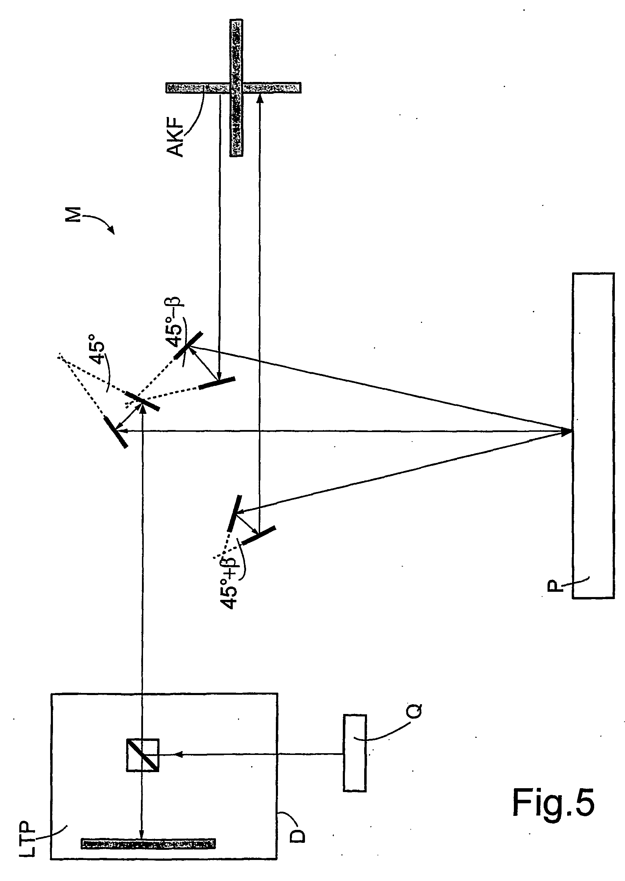

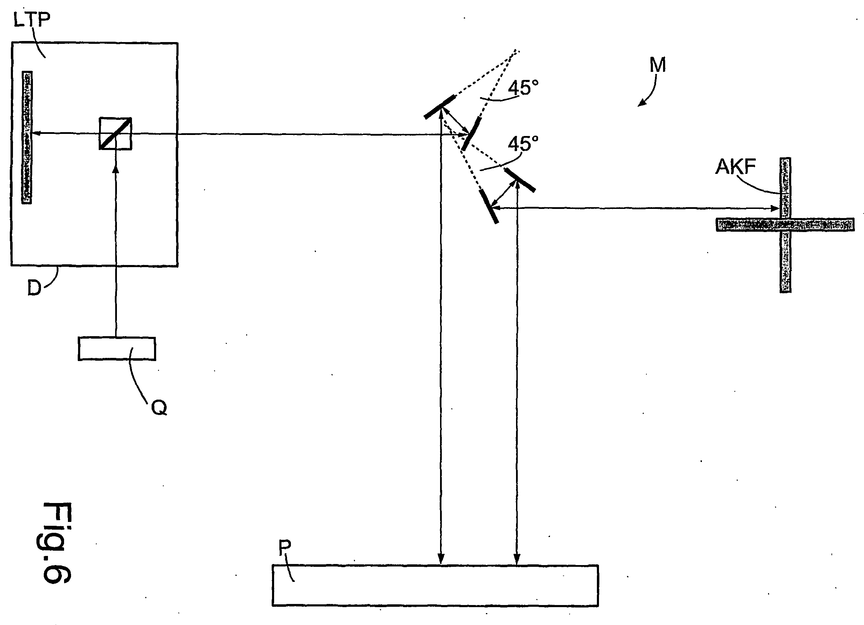

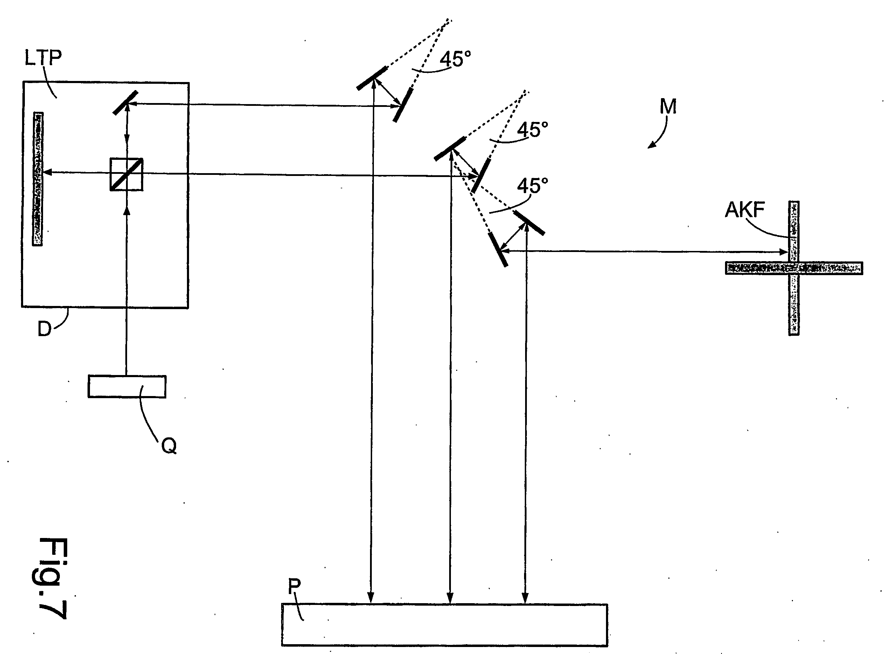

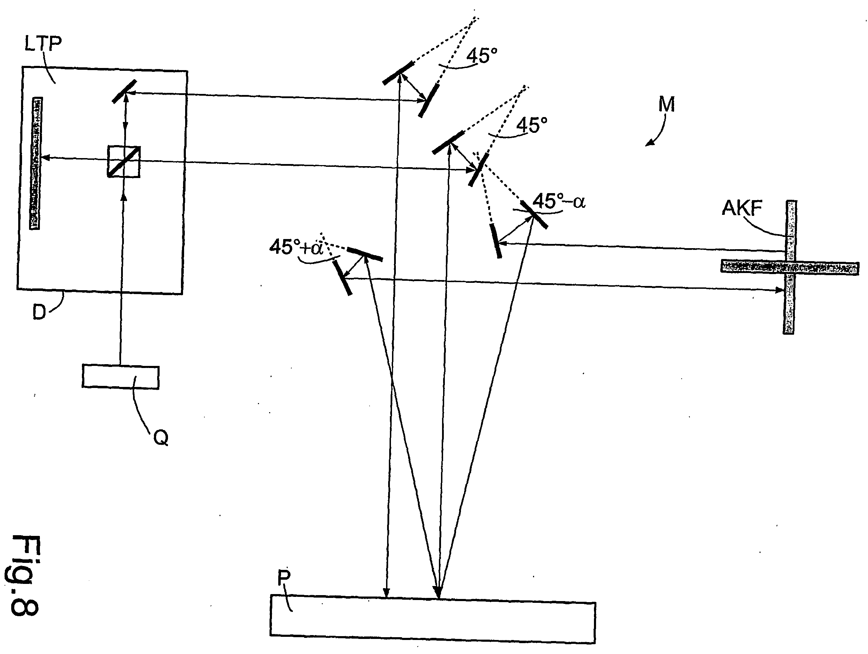

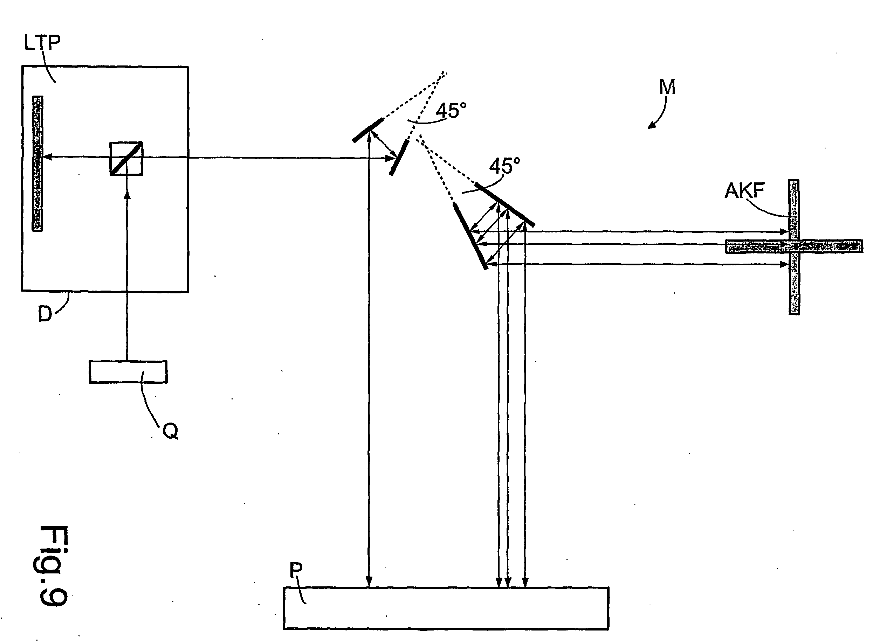

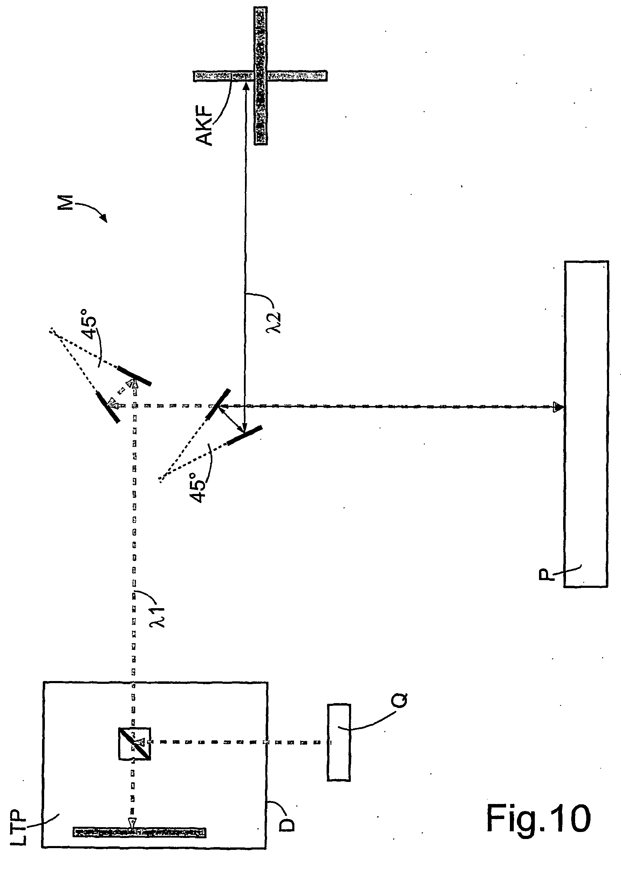

Im Einzelnen zeigt die **Figur 2** eine örtlich identische Antastung mit einem Messstrahl des **AKF** und zwei Messstrahlen des **LTP**, wobei einer der beiden Messstrahlen des **LTP** senkrecht auf die Oberfläche des Prüflings **P** umgelenkt wird. **Figur 3** zeigt denselben Aufbau, jedoch ohne den senkrechten Messstrahl. In der **Figur 4** wird ebenfalls eine örtlich identische Antastung mit einem orthogonalen Messstrahl vom **AKF** und zwei, nicht orthogonal ausgerichteten Messstrahlen vom **LTP** gezeigt. Die **Figur 5** zeigt eine zeitgleiche oder zeitversetzte Antastung an einem Ort mit einem nichtorthogonalen Messstrahl vom **AKF** und einem orthogonalen Messstrahl vom **LTP**. In den folgenden Figuren sind örtlich versetzte Antastungen (zwei oder drei Messpunkte) dargestellt. Die **Figur 6** zeigt eine Antastung mit einem Messstrahl von jedem Messsystem **AKF, LTP,** wobei beide Messstrahlen orthogonal auf die Oberfläche des Prüflings **P** umgeleitet werden. In der **Figur 7** zeigt eine ortsversetzte Antastung mit drei Messstrahlen, die alle orthogonal ausgerichtet sind. Die **Figur 8** schließlich zeigt eine ortsgleiche Antastung eines Messpunktes mit beiden Messsystemen **AKF** und **LTP** mit einer ortsversetzten Antastung eines weiteren Messpunktes, die auch zeitversetzt stattfinden kann. Beide Messstrahlen des **LTP** fallen dabei orthogonal auf den Prüfling **P,** wohingegen der Messstrahl des **AKF** winklig einfällt. Die **Figur 9** zeigt eine ortsversetzte Antastung eines Prüflings **P** mittels drei Messstrahlen des **AKF** an drei verschiedenen Messpunkten und gleichzeitiger Antastung eines weiteren Messpunkts mittels **LTP**. Die **Figur 10** zeigt eine ortsgleiche Antastung eines Prüflings **P** mittels zweier Messsysteme unter Verwendung von verschiedenen Lichtwellenlängen λ₁ für das eine Messsystem **LTP** und λ₂ für das andere Messsystem **AKF**. Die Detektion erfolgt über entsprechende Filter.

Die **Figuren 11 bis 14** zeigen Messergebnisse, die nach dem erfindungsgemäßen Verfahren beziehungsweise mit der Präzisionsmessmaschine nach der Erfindung ermittelt worden sind. Die **Figur 11 a** zeigt ein mit **AKF** und **LTP** aufgenommenes und entsprechend ausgewertetes Oberflächenrelief eines Plangittersubstrats aus einkristallinem Silizium. Der Prüfling hat eine Länge von 100 mm bei einer Breite von 20 mm und einer Höhe von 40 mm. Die Ortsauflösung beträgt 3 mm, es wurden 180 Längsspuren mit einem Abstand von 0,1 mm aufgenommen. Das Oberflächenrelief zeigt über die Länge von ca. 90 mm (scan position) eine maximale Abweichung von ungefähr 8 nm. Damit handelt es sich um ein hochebenes Plangittersubstrat mit einem Krümmungsradius gegen unendlich (130 bis 200 km). Die Messunsicherheit für die Form ist kleiner als der Betrag von ± 0,5 nm. Die **Figur 11b** zeigt eine ermittelte Mittelspur über einen Verlauf von 90 mm. Die maximale Pfeilhöhe p-v (Pfeilhöhe p-v : "peak to valley") beträgt 9,1 nm. Es ergibt sich eine Krümmungsabweichung von 2,7 nm rms, entsprechend 72 marcs rms (marc : milli-Winkelsekunden; rms: root mean square). In der **Figur 11c** ist die hohe Reproduzierbarkeit der aufgenommen Messkurven für die Höhenabweichungen (high deviation), womit die hohe Genauigkeit der Ultrapräzisionsmessmaschine nach der Erfindung belegt ist. Die Reproduzierbarkeit als Differenz von zwei aus je 6 Messreihen gemittelten Ergebnissen beträgt von MW6 zu MW6 ±0,24 nm p-v bei einer Krümmungsabweichung von 0,13 nm rms, entsprechend 11 marcs rms.

Die **Figur 12** zeigt eine dreidimensionale Höhenkarte für einen elliptischen Zylinder aus Glaskeramik, auf dem eine Messfläche mit einer Länge von 120 mm und einer Breite von 25 mm abgetastet wurde. Die Messpunktabstände betrugen 1mm in x- und in y-Richtung. Aus Figur 12 ist die zylindrische Form des Prüflings zu erkennen. Das Profil stellt eine Ellipse dar, deren mittlere Durchbiegung 97,103 µm bei einer mittleren Kreisformabweichung von +/-4,684 µm beträgt. Der hier nicht dargestellte Vergleich des Messergebnisses von der elliptisch-zylindrischen Sollfläche ergibt eine mittlere Formabweichung des Prüflings von 120 nm rms.

Die **Figur 13** zeigt einen Vergleich der Messergebnisse der ursprünglich gewonnenen Neigungsabweichungen (rechts) und der daraus ermittelten Höhenabweichungen (links) eines sphärisch gekrümmten, hochgenauen Spiegels als Prüfling mit einzeln verwendeten Messsystemen (LTP oben und AKF mitte) und mit ihrer Kombination nach der Erfindung (unten). Gezeigt sind die Abweichungen jeweils als Abweichungen von den Sollkoordinaten der mittleren Sphäre. In der unteren Zeile ist die Zusammenfassung aus beiden Einzelmesskurven durch Mittelwertbildung und Nullverschiebung dargestellt. Diese Kurve stellt damit das zusammengefasste Gesamtergebnis dar. Aus den angeführten Messergebnissen für die Neigungs- und Höhenabweichungen ist erkennbar, dass die mit den Zahlen als Maximalabweichung (p-v) und als mittlere quadratische Abweichung (Standardabweichung rms) ausgedrückten Ergebnisse in allen Fällen bei der Zusammenfassung der beiden unterschiedlichen Einzelkurven kleiner sind als bei den Einzelmessungen. Die Ursache hierfür liegt in dem unterschiedlichen Eingehen der systematischen Messabweichungen der einzelnen Sensoren in das Gesamtergebnis. Das zusammengefasste Ergebnis ist daher genauer, wie es nicht von den einzeln betriebenen Messsystemen erbracht werden konnte.

Die **Figur 14** zeigt eine Höhenprofildarstellung der optisch wirksamen Fläche eines Prüflings mit den Abmessungen Länge 510 mm : Breite 120 mm : Höhe 120 mm. Die gemessene mittlere Pfeilhöhe beträgt 20 nm. Die Höhenlinien haben einen Abstand von 2,0 mm. Der Längenradius beträgt 500 km, die gemessene mittlere Krümmungsabweichung beträgt 0,05 arcsec rms, die bei der Messung mit der Präzisionsmessmaschine nach der Erfindung genau im erreichbaren Genauigkeitsbereich liegt.

### Bezugszeichenliste

- **1**: Präzisionsmessmaschine
- **2**: Gesteins-Basis
- **3**: Gesteins-Traverse
- **4**: Positionsschlitten
- **5**: Messtranslationsschlitten
- **6**: Antriebsschlitten
- **7**: Wagen
- **8**: Präzisionsdrehtisch
- **9**: Aufnahme- und Justiervorrichtung
- **10**: Prüfling
- **11**: Gesteins-Konsole
- **12**: Gesteins-Konsole
- **13**: Messsystem (AKF)
- **14**: Messsystem (LTP)
- **15**: Strahlumlenkeinheiten

- **AKF**: Autokollimationsfernrohr
- **D**: Strahlteiler
- **LTP**: Long-Trace-Profilometer
- **M**: Strahlumlenkeinheiten
- **P**: Prüfling
- **Q**: Lichtquelle

## Patentansprüche

1. Optisches Messverfahren zur Ermittlung von Idealformabweichungen technisch polierter Oberflächen mit ebenem oder gekrümmtem Verlauf eines verschiebbar angeordneten Prüflings (10) durch referenzfreie, deflektometrische Antastungen mit zumindest zwei Messstrahlen, die jeweils durch verschiebbare Strahlumlenkeinheiten (15) auf die Oberfläche des Prüflings (10) umgelenkt und unter dem jeweiligen Reflexionswinkel entsprechend detektiert werden, wobei die Messstrahlen durch zumindest zwei unterschiedliche optische Messstrategien erzeugt und detektiert werden und die durch die Gesamtanzahl der verwendeten Messstrahlen bedingten Antastorte örtlich und/oder zeitlich übereinstimmend und/oder versetzt gewählt werden, und weiter **gekennzeichnet durch** eine zusammenführende Auswertung der an den Antastorten detektierten Messwerte zu einem gemeinsamen Messwert **durch** Anwendung wählbarer Auswertestrategien der Autokalibrierung und der Reduzierung zufälliger und systematischer Messabweichungen aus den zumindest beiden unterschiedlichen optischen Messstrategien.

2. Optisches Messverfahren nach Anspruch 1 mit einer Erzeugung nahezu gleich großer Antastorte durch die verwendeten Messstrahlen.

3. Optisches Messverfahren nach Anspruch 1 oder 2 mit zumindest zwei, den unterschiedlichen Messstrategien zugeordneten Messstrahlen mit verschiedenen Wellenlängen, die unter entsprechender Filterung detektiert und der jeweiligen Messstrategie zugeordnet werden.

4. Optisches Messverfahren nach einem der Ansprüche 1 bis 3 mit einer Kombination der Kollimations-Messstrategie mit der Oberflächenprofil-Messstrategie.

5. Optisches Messverfahren nach Anspruch 4 mit einer Erzeugung von mehreren, jeweils einen festen Winkel zueinander einschließenden Messstrahlen durch die Kollimations-Messstrategie.

6. Optisches Messverfahren nach Anspruch 4 oder 5 mit einer Umlenkung des Referenzstrahls beim Oberflächenprofil-Messstrategie als Messstrahl auf den Prüfling.

7. Optisches Messverfahren nach einem der Ansprüche 1 bis 6 mit einer computergestützten Steuerung der verschiebbaren Elemente im kombinierten Zusammenwirken mit den mittels der zumindest zwei unterschiedlichen Messstrategien erfassten Messwerten in speziellen Mess- und Justierprogrammen nach halb- oder vollautomatischen Mess- und Prüflingsjustierstrategien und einer Ablage der Mess- und Positionswerte in einer Speichereinheit.

8. Präzisionsmessmaschine (1) zur Durchführung des hochgenauen Messverfahrens nach einem der Ansprüche 1 bis 7 mit einer Anordnung des Prüflings (10) auf einem in der Maschinentiefe verschiebbaren Positionsschlitten (4), mit einer Verbindung der Strahlumlenkeinheiten mit einem in der Maschinenbreite verschiebbaren Messtranslationsschlitten (5), mit je einem eine Detektionseinheit umfassenden Messsystem (13, 14) pro verwendeter Messstrategie, wobei sich die zumindest beiden Messsysteme (13, 14) mit einem über die Maschinenbreite erstreckenden Abstand gegenüberliegen und parallel zueinander in ihren optischen Messachsen und zum Messtranslationsschlitten (5) ausgerichtet sind, und mit einer Steuer- und Auswertungseinheit zur Auswahl der Antastorte und Auswertung der jeweils erfassten Messwerte.

9. Präzisionsmessmaschine (1) nach Anspruch 8 mit einer in ihren Messachsen zueinander fluchtenden Anordnung der zumindest beiden Messsysteme (13, 14).

10. Präzisionsmessmaschine (1) nach Anspruch 8 oder 9 mit einem Autokollimationsfernrohr (AKF) zur Umsetzung der Kollimations-Messstrategie und einem Long-Trace-Profilometer (LTP) zur Umsetzung der Oberflächenprofil-Messstrategie.

11. Präzisionsmessmaschine nach einem der Ansprüche 8 bis 10 mit einem Aufbau der Strahlumlenkeinheiten (15) aus zwei reflektierenden ebenen Spiegelflächen, die fest mit einer Orientierung der Schnittkanten rechtwinklig zur Verschiebungsrichtung des Messtranslationsschlittens (5) zueinander angeordnet sind.

12. Präzisionsmessmaschine nach einem der Ansprüche 8 bis 11 mit einem Aufbau der Strahlumlenkeinheiten (15) aus Doppelspiegeln, deren reflektierende Flächen einen Winkel δ = 45° ±α, β zueinander aufweisen und deren Flächennormale jeweils in δ/2 zu den ausgesendeten Messstrahlen der beiden Messsysteme (13, 14) und zu den von der Oberfläche des Prüflings (10) reflektierten Messstrahlen angeordnet ist.

13. Präzisionsmessmaschine nach Anspruch 12 mit einem Aufbau der Strahlumlenkeinheiten (15) als Pentagonalprismen.

14. Präzisionsmessmaschine nach einem der Ansprüche 8 bis 13 mit einem Schutz der freien Lichtwege durch längenvariable und feste Luftabtrennvorrichtungen.

15. Präzisionsmessmaschine nach einem der Ansprüche 8 bis 14 mit einer Verschiebung des Messtranslationsschlittens (5) durch einen gesonderten Antriebsschlitten (6), wobei die Verbindung der beiden Schlitten (5, 6) über eine Kupplung erfolgt, die in den rotatorischen Verschiebungsrichtungen elastisch aufgebaut ist.

16. Präzisionsmessmaschine nach einem der Ansprüche 8 bis 15 mit einer rechtwinkligen Anordnung des Positionsschlittens (4) zum Messtranslationsschlitten (5), wobei dessen Tischfläche parallel zur Verschiebungsfläche und rechtwinklig zu der Richtung der umgelenkten Messstrahlen ausgerichtet ist.

17. Präzisionsmessmaschine nach Anspruch 15 mit einer Anordnung eines parallel zum Messtranslationsschlitten (5) geführten Wagens (7) auf der Tischfläche des Positionsschlittens (4).

18. Präzisionsmessmaschine nach Anspruch 16 oder 17 mit einer Befestigung eines Präzisionsdrehtisches (8) auf dem Wagen (7), dessen Drehachse orthogonal zu den Verschiebungsrichtungen sowohl des Messtranslationsschlittens (5) als auch des Wagens (7) angeordnet ist.

19. Präzisionsmessmaschine nach Anspruch 18 mit einer Ausführung des Präzisionsdrehtisches (8) mit einer schwenkbaren Rotationsachse zur zusätzlichen Umsetzung einer Schwenkbewegung.

20. Präzisionsmessmaschine nach Anspruch 18 oder 19 mit einer Anordnung einer Aufnahme- und Justiervorrichtung (9) für den Prüfling (10) auf dem Präzisionsdrehtisch (8), die aus einem Aufnahmetisch mit drei in einem rechtwinkligen, gleichschenkligen oder gleichseitigen Dreieck angeordneten Auflagestützen besteht, von denen mindestens zwei höhenverstellbar sind, und dessen ebene Tischfläche parallel zur Tischfläche des Wagens (7) angeordnet ist und mit den höhenverstellbaren Stützen um die rechtwinklig zueinander liegenden Verschiebungsachsen von Wagen (7) und Messtranslationsschlittens (5) verkippt werden kann.

21. Präzisionsmessmaschine nach einem der Ansprüche 8 bis 20 mit einer Ausrüstung verschieblicher Elemente mit Messsensoren zur jeweiligen Positionsbestimmung.

22. Präzisionsmessmaschine nach einem der Ansprüche 8 bis 21 mit einer Ausrüstung verschieblicher Elemente mit elektrisch ansteuerbaren Antriebssystemen.

23. Präzisionsmessmaschine nach einem der Ansprüche 8 bis 22 mit einer sehr geringen elektrischen Verlustleistung der Antriebs- und Messsysteme, wobei während der Messabläufe nur ein Antriebssystem und die Messsysteme (13, 14) in Funktion sind.

24. Präzisionsmessmaschine nach einem der Ansprüche 8 bis 23 mit einer Ausführung der verschiedenen Lagerungssysteme als Luftlager.

25. Präzisionsmessmaschine nach einem der Ansprüche 8 bis 24 mit einer Anordnung von Sekundärsensoren an empfindlichen Maschinengruppen zur Feststellung von Temperaturdifferenzen, Schwingungen, Luftfeuchtigkeit und Luftdruck, deren Messwerte in die Auswertung einbezogen werden.

26. Präzisionsmessmaschine nach einem der Ansprüche 8 bis 25 mit einem den gesamten Messbereich umfassenden, temperaturisolierenden und weitgehend luftundurchlässigen Gehäuse.

## Claims

1. Optical measuring method for determining ideal shape deviations of technically polished surfaces with a plane or curved profile of a displaceably arranged specimen (10) by reference-free deflectometric samplings with at least two measuring beams, which are respectively deviated onto the surface of the specimen (10) by displaceable beam deviating units (15) and correspondingly detected at the respective reflection angle, the measuring beams being generated and detected by at least two different optical measuring strategies and the sampling positions entailed by the total number of the measuring beams used being selected to be spatially and/or temporally coincident and/or offset, and further **characterised by** combined evaluation of the measurement values detected at the sampling positions to form a common measurement value by applying selectable evaluation strategies for autocalibration and reduction of random and systematic measurement deviations from the at least two different optical measuring strategies.

2. Optical measuring method according to Claim 1, with generation of almost equally large sampling positions by the measuring beams which are used.

3. Optical measuring method according to Claim 1 or 2, with at least two measuring beams assigned to the different measuring strategies and having different wavelengths which are detected, and assigned to the respective measuring strategy, by appropriate filtering.

4. Optical measuring method according to one of Claims 1 to 3, with a combination of the collimation measuring strategy with the surface profile measuring strategy.

5. Optical measuring method according to Claim 4, with generation of a plurality of measuring beams, respectively making a fixed angle between one another, by the collimation measuring strategy.

6. Optical measuring method according to Claim 4 or 5, with deviation of the reference beam onto the specimen as a measuring beam in the surface profile measuring strategy.

7. Optical measuring method according to one of Claims 1 to 6, with computer-assisted control of the displaceable elements in combined cooperation with the measurement values recorded by means of the at least two different measuring strategies in special measuring and aligning programs according to semi and fully automatic measuring and specimen aligning strategies and storage of the measurement and position values in a memory unit.

8. Precision measuring machine (1) for carrying out the high-accuracy measuring method according to one of Claims 1 to 7, with arrangement of the specimen (10) on a position stage (4) displaceable in the machine depth, with connection of the beam deviating units to a measurement translation stage (5) displaceable in the machine width, with one measuring system (13, 14) comprising a detection unit per measuring strategy used, the at least two measuring systems (13, 14) facing one another with a separation extending over the machine width and being mutually aligned parallel in their optical measuring axes and with respect to the measurement translation stage (5), and with a control and evaluation unit for selecting the sampling positions and evaluating the respectively recorded measurement values.

9. Precision measuring machine (1) according to Claim 8, with arrangement of the at least two measuring systems (13, 14) mutually flush in their measuring axes.

10. Precision measuring machine (1) according to Claim 8 or 9, with an autocollimation telescope (ACT) for implementing the collimation measuring strategy and a long-trace profilometer (LTP) for implementing the surface profile measuring strategy.

11. Precision measuring machine according to one of Claims 8 to 10, with construction of the beam deviating units (15) from two reflecting plane mirror surfaces, which are arranged mutually fixed with orientation of the intersection edges perpendicularly to the displacement direction of the measurement translation stage (5).

12. Precision measuring machine according to one of Claims 8 to 11, with construction of the beam deviating units (15) from double mirrors, whose reflecting surfaces make an angle δ=45° ±α, β with one another and whose surface normal is in each case arranged at δ/2 to the emitted measuring beams of the two measuring systems (13, 14) and to the measuring beams reflected by the surface of the specimen (10).

13. Precision measuring machine according to Claim 12, with construction of the beam deviating units (15) as pentagonal prisms.

14. Precision measuring machine according to one of Claims 8 to 13, with protection of the free light paths by variable-length and fixed air separation devices.

15. Precision measuring machine according to one of Claims 8 to 14, with displacement of the measurement translation stage (5) by a separate drive stage (6), the two stages (5, 6) being connected via coupling which is constructed to be resilient in the rotary displacement directions.

16. Precision measuring machine according to one of Claims 8 to 15, with perpendicular arrangement of the position stage (4) with respect to the measurement translation stage (5), its table surface being aligned parallel to the displacement surface and perpendicularly to the direction of the deviated measuring beams.

17. Precision measuring machine according to Claim 15, with arrangement of a carriage (7), guided parallel to the measurement translation stage (5), on the table surface of the position stage (4).

18. Precision measuring machine according to Claim 16 or 17, with fastening of a precision turntable (8) on the carriage (7), whose rotation axis is arranged orthogonally to the displacement directions both of the measurement translation stage (5) and of the carriage (7).

19. Precision measuring machine according to Claim 18, with design of the precision turntable (8) with a tiltable rotation axis for the additional implementation of a tilting movement.

20. Precision measuring machine according to Claim 18 or 19, with arrangement of a receiving and aligning device (9) for the specimen (10) on the precision turntable (8), which consists of a receiving table with three bracing supports arranged in a right-angled, isosceles or equilateral triangle, at least two of which are height-adjustable, and whose plane table surface is arranged parallel to the table surface of the carriage (7) and can be tilted with the height-adjustable supports about the mutually perpendicular displacement axes of the carriage (7) and the measurement translation stage (5).

21. Precision measuring machine according to one of Claims 8 to 20, with displaceable elements being equipped with measuring sensors for the respective position determination.

22. Precision measuring machine according to one of Claims 8 to 21, with displaceable elements being equipped with resiliently drivable drive systems.

23. Precision measuring machine according to one of Claims 8 to 22, with a very low electrical power loss of the drive and measuring systems, only one drive system and the measuring systems (13, 14) being in operation during the measuring processes.

24. Precision measuring machine according to one of Claims 8 to 23, with design of the various bearing systems as aircushion bearings.

25. Precision measuring machine according to one of Claims 8 to 24, with arrangement of secondary sensors on sensitive machine modules for establishing temperature differences, vibrations, humidity and air pressure, whose measurement values are incorporated into the evaluation.

26. Precision measuring machine according to one of Claims 8 to 25, with a thermally insulating and substantially airtight housing comprising the entire measurement region.

## Revendications

1. Procédé de mesure optique pour déterminer des écarts par rapport à une forme idéale de surfaces polies par des moyens techniques, ayant un tracé plan ou courbe d'une ébauche (10) installée de manière coulissante, par des détections déflectométriques, sans référence, à l'aide d'au moins deux faisceaux de mesure déviés chaque fois par une unité de déviation de faisceau (15), coulissante, sur la surface de l'ébauche (10) et détection de façon correspondante avec chaque angle de réflexion respectif,
les faisceaux de mesure étant générés et détectés par au moins deux stratégies de mesures optiques différentes et on sélectionne les emplacements de détection conditionnés par le nombre total de faisceaux de mesure utilisés, de façon à se correspondre localement et/ou dans le temps et/ou en étant décalés et **caractérisés en outre par** une exploitation en concordance des valeurs de mesure détectées au point de détection pour former une valeur de mesure commune par l'application de stratégies d'exploitation sélectionnées de l'autocalibrage et de la réduction des écarts de mesure systématiques et aléatoires au moins dans ces deux stratégies de mesures optiques différentes.

2. Procédé de mesure optique selon la revendication 1, générant pratiquement des points de détection de mêmes dimensions par les faisceaux de mesure utilisés.

3. Procédé de mesure optique selon la revendication 1 ou 2, avec au moins deux faisceaux de mesure de longueurs d'ondes différentes, associés aux stratégies de mesures différentes, et qui sont détectés par filtrage correspondant et sont associés aux stratégies de mesures respectives.

4. Procédé de mesure optique selon l'une des revendications 1 à 3, avec la combinaison des stratégies de mesure de collimation et la stratégie de mesure du profil de surface.

5. Procédé de mesure optique selon la revendication 4, selon lequel on génère plusieurs faisceaux de mesure faisant entre eux un angle fixe par la stratégie de mesure par collimation.

6. Procédé de mesure optique selon la revendication 4 ou 5, selon lequel on dévie le faisceau de référence dans la stratégie de mesure de profil de surface comme faisceau de mesure vers l'ébauche.

7. Procédé de mesure optique selon l'une des revendications 1 à 6, comportant une commande assistée par ordinateur des éléments coulissants en coopérant de manière combinée avec les valeurs de mesure saisies à l'aide d'au moins deux stratégies de mesures différentes dans des programmes spéciaux de mesure et d'ajustage selon des stratégies de mesure et d'ajustage d'ébauche, semi-automatique et totalement automatique et enregistrement des valeurs de mesure et de position dans une mémoire.

8. Machine de mesure de précision (1) pour effectuer un procédé de mesure très précis selon l'une des revendications 1 à 7, comprenant un montage de l'ébauche (10) sur un chariot de positionnement (4) coulissant dans la profondeur de la machine, une liaison des unités de déviation de faisceau à un chariot de translation de mesure (5) coulissant dans le sens de la largeur de la machine, un système de mesure (13, 14) comprenant chaque fois une unité de détection par stratégie employée, au moins les deux systèmes de mesure (13, 14) se faisant face à une distance s'étendant dans le sens de la largeur de la machine et ces deux systèmes sont alignés parallèlement l'un par rapport à l'autre suivant leur axe de mesure optique et par rapport au chariot de translation de mesure (5) et une unité de commande et d'exploitation pour sélectionner les emplacements de détection et exploiter les valeurs de mesure respectivement saisies.

9. Machine de mesure de précision (1) selon la revendication 8, comportant un montage au moins des deux systèmes de mesure (13, 14) sur des axes de mesures alignés.

10. Machine de mesure de précision (1) selon la revendication 8 ou 9, comportant un tube de télémétrie à autocollimation (AKF) pour convertir la stratégie de mesure de collimation et un profilomètre trace longue (LTP) pour convertir la stratégie de mesure de profil de surface.

11. Machine de mesure de précision (1) selon l'une des revendications 8 à 10, comprenant une réalisation des unités de déviation de faisceau (15) à partir de deux surfaces de miroirs planes réfléchissantes disposées à l'équerre solidairement avec une orientation des arêtes de coupe par rapport à la direction de coulissement du chariot de translation de mesure (5).

12. Machine de mesure de précision (1) selon l'une des revendications 8 à 11, comportant une structure d'unités de déviation de faisceau (15) formée de doubles miroirs dont les surfaces réfléchissantes font entre elles un angle δ = 45° ±α, β et dont la normale à la surface se trouve chaque fois à δ/2 des faisceaux de mesure émis par les deux systèmes de mesure (13, 14) pour le faisceau de mesure réfléchi par la surface de l'ébauche (10).

13. Machine de mesure de précision (1) selon la revendication 12, comportant une installation des unités de déviation de faisceau (15) selon des prismes en pentagone.

14. Machine de mesure de précision (1) selon l'une des revendications 8 à 13, comportant une protection des chemins lumineux libres par des dispositifs de séparation de longueurs variables et fixes.

15. Machine de mesure de précision (1) selon l'une des revendications 8 à 14, comportant une translation du chariot de translation de mesure (5) par un chariot d'entraînement (6) particulier, la liaison des deux chariots (5, 6) se faisant par l'intermédiaire d'un embrayage installé de manière élastique dans les directions de déplacement en rotation.

16. Machine de mesure de précision (1) selon l'une des revendications 8 à 15, comportant une disposition à l'équerre du chariot de positionnement (4) par rapport au chariot de translation (5), les surfaces de plateau étant parallèles à la surface de coulissement et perpendiculaires à la direction du faisceau lumineux à mesurer.

17. Machine de mesure de précision (1) selon la revendication 15, comportant un chariot (7) guidé parallèlement au chariot de translation de mesure (5) sur la surface de plateau du chariot de positionnement (4).

18. Machine de mesure de précision (1) selon la revendication 16 ou 17, comportant une fixation d'une table de précision (8) sur le chariot (7) dont l'axe de rotation est perpendiculaire aux directions de coulissement à la fois du chariot de translation de mesure (5) et du chariot (7).

19. Machine de mesure de précision (1) selon la revendication 18, comportant une réalisation du plateau tournant de précision (8) avec un axe de rotation pivotant pour convertir en outre un mouvement de pivotement.

20. Machine de mesure de précision (1) selon la revendication 18 ou 19, comportant un dispositif de réception et d'ajustage (9) de l'ébauche (10) sur la table rotative de précision (8) qui se compose d'une table de réception avec trois supports d'appui installés dans un triangle rectangle, isocèle ou équilatéral et au moins deux de ces appuis sont réglables en hauteur et la surface plane de la table est parallèle à la surface du plateau du chariot (7) qui peut être basculé, avec des appuis réglables en hauteur autour d'axes de coulissement du chariot (7) faisant entre eux un angle rectangle, et aussi par rapport au chariot à transformation (5).

21. Machine de mesure de précision (1) selon l'une des revendications 8 à 20, comportant un équipement d'éléments coulissants avec des capteurs de mesure pour déterminer la position respective.

22. Machine de mesure de précision (1) selon l'une des revendications 8 à 21, comportant un équipement d'éléments coulissants à système d'entrainement à commande électrique.

23. Machine de mesure de précision (1) selon l'une des revendications 8 à 22, présentant très peu de perte de puissance électrique des systèmes d'entraînement et de mesure et pendant les mesures un seul système d'entraînement et le système de mesure (13, 14) sont en fonction.

24. Machine de mesure de précision (1) selon l'une des revendications 8 à 23, comportant une réalisation des systèmes de montage coulissants sous la forme de paliers pneumatiques.

25. Machine de mesure de précision (1) selon l'une des revendications 8 à 24, comportant des capteurs secondaires pour des groupes de machines sensibles, pour fixer les dérives de température, les oscillations, l'humidité de l'air et la pression de l'air dont les valeurs de mesure sont intégrées dans l'exploitation.

26. Machine de mesure de précision (1) selon l'une des revendications 8 à 25, selon laquelle toute la plage de mesure comprend des boîtiers isolés en température et d'autres très largement perméables à l'air.
